# EUROPÄISCHE PATENTSCHRIFT

(11) **EP 1 446 557 B1**
(45) Veröffentlichungstag und Bekanntmachung des Hinweises auf die Patenterteilung: **02.11.2006**
(21) Anmeldenummer: 02745750.6
(22) Anmeldetag: 22.07.2002
(51) Int. Cl.: F01D 25/26, F01D 25/12

(54) **TURBOMASCHINE**
TURBINE UNIT
TURBOMACHINE

(30) Priorität: 30.10.2001 CH 198901
(43) Veröffentlichungstag der Anmeldung: 18.08.2004
(73) Patentinhaber: Alstom Technology Ltd, 5400 Baden (CH)
(72) Erfinder: DITTMANN, Rolf, Dr., CH-5415 Nussbaumen (CH); HURTER, Jonas, CH-5400 Baden (CH); MARMILIC, Robert, CH-5415 Nussbaumen (CH); MEYLAN, Pierre, CH-2532 Magglingen (CH); PAULI, Ernst, Dr., CH-8057 Zürich (CH)
(86) Internationale Anmeldenummer: PCT/IB2002/002884
(87) Internationale Veröffentlichungsnummer: WO 2003/038243

(56) Entgegenhaltungen:
- WO-A-00/11324
- DE-C- 367 109
- DE-C- 507 129
- US-A- 3 631 672
- US-A- 4 351 150
- US-A- 5 388 960

## Beschreibung

### Technisches Gebiet

Die vorliegende Erfindung betrifft eine Turbomaschine gemäss dem Oberbegriff des Anspruchs 1. Sie betrifft weiterhin ein Verfahren zum Betrieb einer derartigen Turbomaschine.

### Stand der Technik

Das Phänomen des sogenannten "Buckelns" des Läufers wie des Gehäuses von Turbomaschinen wie Gasturbinen und Dampfturbinen ist hinreichend bekannt. Es wird dadurch hervorgerufen, dass die grossen und massereichen Strukturen solcher Maschinen nach längerem Betrieb grosse Wärmemengen gespeichert haben. Beim Abkühlen stellt sich in den vergleichsweise grossen Strömungskanälen eine ausgeprägte vertikale Temperaturschichtung ein, welche zu ungleichmässigen Temperaturverteilungen in den statischen wie den rotierenden Bauteilen führt, was aufgrund der unterschiedlichen thermischen Dehnungen in einem Verzug von Gehäuse und Rotor und Abweichungen von der rotationssymmetrischen Sollgeometrie resultiert. Bei den unvermeidlich geringen Spaltmassen in modernen Turbomaschinen kommt es dadurch zum Blockieren des Rotors im Gehäuse, was zu Lasten der Startverfügbarkeit geht, und daneben die mechanische Integrität zu gefährden vermag. Bekannt sind daher beispielsweise aus der US 3,793,905 oder der US 4,854,120 Systeme zum Wellendrehen oder auch zum sogenannten Wellenschalten. Dabei wird der Rotor einer Turbomaschine nach dem Abstellen mit einer gewissen Drehzahl weitergedreht. Dabei sind, wie beim bekannten Wellenschalten, geringe Drehzahlen im Bereich von 1/min oder weniger bevorzugt. Dies genügt einerseits, um die Kühlung des Rotors in Umfangsrichtung zu vergleichmässigen; andererseits ist die Drehzahl niedrig genug, um keine ausgeprägte Axialdurchströmung etwa des Heissgaspfades einer Gasturbine, mit damit verbundenem Kaltlufteintrag und Thermoschocks, zu provozieren.

Moderne Gasturbinen werden im hochtemperaturbelasteten Teil häufig mit zweischaligen Gehäusen ausgeführt. Dabei ist zwischen einem inneren Gehäuse und einem äusseren Gehäuse ein Ringraum ausgebildet, der im Betrieb häufig mit Kühlluft oder anderem Kühlmittel beaufschlagt wird. In dem Ringraum bildet sich ist nach dem Abstellen der Gasturbine ohne weitere Massnahmen ebenfalls eine vertikale Temperaturschichtung aus, die zu einem Verzug der Gehäuse führt.

Die DE 507 129 wie auch die WO 00/11324 schlagen vor, bei einem zweischaligen Gehäuse einer Turbine Mittel vorzusehen, um durch eine erzwungene Strömung innerhalb des Zwischenraums die stabile Temperaturschichtung zu stören. Dabei wird im wesentlichen vorgeschlagen ausserhalb des Ringraumes Fluid von einer Stelle des Ringraumes zu einer anderen Stelle des Ringraumes zu fördern, wodurch eine Ausgleichsströmung innerhalb des Ringraumes induziert wird. Unterstützend wird dabei vorgeschlagen, vergleichweise kühles Fluid vom Gehäuseunterteil ins Gehäuseoberteil zu fördern, oder umgekehrt, um die Dichteunterschiede zusätzlich zum Antrieb der Konvektionsströmung zu nutzen. Festzustellen ist bei der DE 507 129 und der WO 00/11324, dass die Antriebskräfte für die Strömung nur indirekt wirken, wie erwähnt, in Form der Ausgleichströmung. Weiterhin vermitteln die DE 507 129 wie auch die WO 00/11324 keine Anregung, die Strömung gezielt gerichtet einzustellen werden kann

### Darstellung der Erfindung

Aufgabe der Erfindung ist es, eine Turbomaschine der eingangs erwähnten Art anzugeben, welche es ermöglicht, dem innerhalb einer Kavität enthaltenen Fluid unmittelbar eine Strömung zur Vermeidung der schädlichen Temperaturschichtung aufzuprägen.

Erfindungsgemäss wird dies durch die Gesamtheit der Merkmale des Anspruchs 1 erreicht.

Kern der Erfindung ist es also, Mittel, die geeignet sind, dem Fluid innerhalb einer Kavität gezielt eine erzwungene und bevorzugt gerichtete Konvektion mit einer vorwiegenden Umfangskomponente aufzuprägen, unmittelbar in der Kavität selbst anzuordnen. Die Kavität ist dabei insbesondere zwischen einem inneren und einem äusseren Gehäuse der Turbomaschine gebildet, so beispielsweise zwischen einer Brennraumwand und einem Aussengehäuse einer Gasturbine. In diesem Falle ist die Kavität mit einem im Wesentlichen ringförmigen Querschnitt, insbesondere als Torus, oder mit einem Querschnitt in Form eines Ringsegmentes ausgebildet. Aufgrund der hohen thermischen Belastung während des Betriebes der Turbomaschine ist es von Vorteil, wenn die Mittel zum Antrieb der Strömung keine beweglichen Teile aufweisen. Der unmittelbare Einsatz von Gebläsen, Ventilatoren und dergleichen Vorrichtungen mit beweglichen Teilen innerhalb der Kavität zum Antrieb der Konvektionsströmung ist also mit Vorteil zu vermeiden. Es ist erfindungsgemäß wenigstens ein Ejektor innerhalb der Kavität angeordnet, welcher mit einem Treibmedium betreibbar ist. Im Sinne der Erfindung kann ein Ejektor ohne Weiteres beispilesweise auch eine in einer Gehäusewand angeordnete Bohrung mit tangentialer Orientierung sein, welche eine gerichtete Strömung in die Kavität einzubringen vermag. Ejektoren benötigen nur einen geringen Massenstrom von Treibmedium, um eine für den angestrebten Zweck hinreichende Strömung mit zum Beispiel 8 m/s bis 20m/s innerhalb der Kavität anzutreiben und aufrechtzuerhalten. Diese Limitierung des Massenstroms des Treibmediums ist gerade dann wichtig, wenn vorhandene Hilfssysteme zum Antrieb der Strömung benutzt werden sollen, welche kaltes Fluid, beispielsweise Aussenluft, in die Kavität fördern. Die Ejektoren haben weiterhin den Vorteil, eine gerichtete Umströmung einstellen zu können, dergestalt, dass der hervorgerufenen Strömung neben der überwiegenden Umfangskomponente auch eine Axialkomponente aufgeprägt wird. Dies hat den weiteren Vorteil, dass auch axiale Temperaturunterschiede in axial ausgedehnten Kavitäten vergleichmässigt werden können.

In einer bevorzugten Ausführungsform der Erfindung ist die Kavität mit einer Entnahmestelle versehen, welche über ein Gebläse, welches ausserhalb der Region hoher thermischer Belastung angeordnet werden kann, mit dem Ejektor verbunden ist. Dieses Gebläse fördert ein Treibmedium in einem geschlossenen Kreislauf von der Entnahmestelle zum Ejektor. Der Temperaturgradient eines Turbinengehäuses kann somit deutlich verringert werden, was auch die Sicherheit und Zuverlässigkeit eines gegebenenfalls zu realisierenden Warmstarts verbessert.

In einer weiteren bevorzugten Ausführungsform der Erfindung ist ein Ejektor an einer geodätisch am weitesten oben oder unten liegenden Stelle der Kavität angeordnet, während die mit diesem verbundene Entnahmestelle an einer entgegengesetzt, das heisst am weitesten unten oder am weitesten oben, liegenden Stelle der Kavität angeordnet ist. Auf diese Weise ist der Dichteunterschied zwischen dem aus einem Ejektor austretenden Treibmedium und dem Medium in der Kavität and der Stelle des Austritts maximal, dergestalt, dass die Naturkonvektion unterstützend wirkt, und auf eine gewisse Weise zu einer Selbstregelung der Temperaturverteilung beiträgt: Sobald sich eine Temperaturschichtung von einigen Grad einstellt, wird die Antriebskraft des Ejektors durch die Dichteunterschiede verstärkt. Wenn umgekehrt die Temperatur vergleichmässigt ist, ist die Verstärkung gering oder verschwindet ganz.

Wenn die Kavität einen ringförmigen Querschnitt aufweist, sind Mittel zur Anregung und Aufrechterhaltung der Durchströmung bevorzugt so beschaffen und angeordnet, dass die Strömung um weniger als 30°, besonders bevorzugt weniger als 10°, in axialer Richtung gegen die Umfangsrichtung geneigt ist. So werden Ejektoren vorzugsweise mit Ihrer Ausblaserichtung im Wesentlichen in Umfangsrichtung orientiert. Allenfalls kann eine Anstellung bis etwa 30° in axialer Richtung Vorteile bringen, da bei einer axial ausgedehnten Kavität auf diese Weise auch eine Vergleichmässigung der axialen Temperaturverteilung erzielt wird. Insbesondere ist es von Vorteil in Bezug auf die Intensität der Strömungsanregung, wenn eine Anzahl von zwei oder mehr Ejektoren mit gleichsinniger Orientierung der Ausblaserichtung äquidistant am Umfang der Kavität angeordnet sind. Wenn diese wie beschrieben im geschlossenen Kreislauf angeordnet sind, ist es auch von Vorteil, die einem Ejektor zugeordnete Entnahmestelle der Kavität bezogen auf die Ausblaserichtung eines Ejektors unmittelbar stromauf eines an einer anderen Umfangsposition angeordneten Ejektors zu platzieren. Dabei kann es wiederum von Vorteil sein, die Entnahmestelle an einer anderen axialen Position anzuordnen als den dieser zugeordneten Ejektor; diese Massnahme ist durchaus auch geeignet, eine axiale Vergleichmässigung der Temperaturen zu unterstützen.

Im Stillstand der Turbomaschine, insbesondere während einer einer Ausserbetriebnahme folgenden Abkühlungsphase, wird eine Strömung in der Kavität erzwungen, welche der Entstehung einer ausgeprägten Temperaturschichtung entgegenwirkt. Die Umfangsgeschwindigkeit der Tangentialströmung liegt dabei bevorzugt in einem Bereich von 8 m/s bis zu 20 m/s. Dieser Geschwindigkeitsbereich hat sich als besonders günstig erwiesen, um einerseits eine hinreichende Intensität des Temperaturausgleichs zu erreichen und andererseits die Entstehung potenziell kontraproduktiver Turbulenzen und Sekundärströmungen zu vermeiden. Dabei liegt der Massenstrom des durch die Ejektoren geförderten Fluides mit Vorteil unter 2 kg/s, ein Bereich zwischen 0,5 kg/s und 1,25 kg/s ist dabei zu bevorzugen. In ringförmigen Kavitäten wird bevorzugt eine Umfangsströmung oder eine schraubenförmige Strömung angeregt. Der Steigungswinkel der schraubenförmigen Strömung liegt dabei bevorzugt unter 30°, bevorzugt unter 10°.

In einer Ausgestaltung der Erfindung weist die Kavität Öffnungen zur Ableitung von Fluid auf, durch welche Fluid aus der Kavität abströmen kann. Dies ist insbesondere dann von Vorteil, wenn in die Kavität, beispielsweise zum Antrieb der Tangentialströmung, Fluid von aussen herangeführt wird. Die Öffnungen sind bevorzugt symmetrisch am Umfang angeordnet, beispielsweise in Form eines Ringspaltes, ringsegmentförmiger Spalte, oder am Umfang verteilter Bohrungen. Die Öffnungen stehen beispielsweise mit dem Heissgaspfad einer Gasturbine in Fluidverbindung, so, dass in der Kavität befindliches Fluid, welches durch neu herangeführtes Fluid verdrängt wird, in den Heissgaspfad abströmen kann. Unter Heissgaspfad ist in diesem Zusammenhang der gesamte Strömungsweg vom Eintritt in die erste Turbinenleitreihe bis hin zum Abgasdiffusor zu verstehen.

### Kurze Beschreibung der Zeichnung

Die Erfindung soll nachfolgend anhand der Zeichnung näher erläutert werden. Im Einzelnen zeigen
- Figur 1 einen Teil des thermischen Blockes einer Gasturbine;
- Figur 2 ein erstes Beispiel für die erfindungsgemässe Ausführung der Gasturbine aus Figur 1 im Querschnitt;
- Figur 3 eine vereinfachte Variante der erfindungsgemässen Ausführung der Gasturbine;
- Figur 4 eine bevorzugte Ausführungsform der Erfindung;
- Figur 5 eine weitere Vorzugsvariante der Erfindung;
- Figur 6 eine die Prinzipien der Erfindung nutzende Vorrichtung an einer nicht ringförmigen Kavität.

Selbstverständlich stellen die folgenden Figuren nur illustrative Beispiele dar, und sind bei Weitem nicht in der Lage, alle dem Fachmann offenbarten Ausführungsformen der Erfindung, wie sie in den Ansprüchen gekennzeichnet ist, darzustellen.

### Weg zur Ausführung der Erfindung

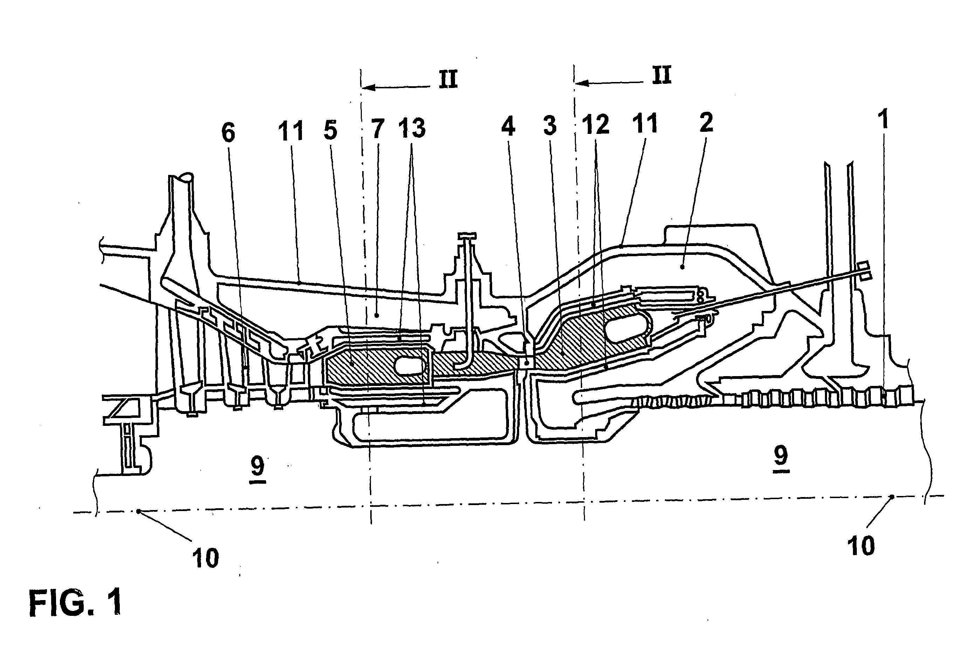

Die Erfindung soll im Kontext einer Turbomaschine erläutert werden. In Fig. 1 ist daher der thermische Block einer Gasturbine dargestellt, wobei nur der oberhalb der Maschinenachse 10 befindliche Teil gezeigt ist. Bei der in Figur 1 dargestellten Maschine handelt es sich um eine Gasturbine mit sogenannter sequentieller Verbrennung, wie sie beispielsweise aus der EP 620362 bekannt ist. Obschon deren Funktionsweise für die Erfindung ohne primäre Bedeutung ist, sei diese der Vollständigkeit halber in groben Zügen erläutert. Ein Verdichter 1 saugt einen Luftmassenstrom an und verdichtet diesen auf einen Arbeitsdruck. Die verdichtete Luft strömt durch ein Plenum 2 in eine erste Brennkammer 3 ein. Dort wird eine Brennstoffmenge eingebracht und in der Luft verbrannt. Das entstehende Heissgas wird in einer ersten Turbine 4 teilentspannt; und strömt in eine zweite Brennkammer 5, eine sogenannte SEV-Brennkammer, ein. Dort zugeführter Brennstoff entzündet sich aufgrund der noch hohen Temperatur des teilentspannten Heissgases. Das nacherhitzte Heissgas wird in einer zweiten Turbine 6 weiter entspannt, wobei eine mechanische Leistung auf die Welle 9 übertragen wird. Im Betrieb herrschen bereits in den letzten Verdichterstufen, erst recht aber im Bereich der Brennkammern 3, 5 und in den Turbinen 4, 6 Temperaturen von mehreren 100 °C. Nach dem Abstellen einer solchen Maschine speichern die grossen Massen - beispielsweise eine Masse des Rotors 9 von 80 Tonnen - eine grosse Wärmemenge über eine längere Zeit. In den Strömungsquerschnitten der Maschine stellt sich wenigstens bei der üblichen Aufstellung einer Gasturbine mit waagerechter Maschinenachse während des Abkühlens im Stillstand eine ausgeprägte vertikale Temperaturschichtung ein. Diese führt dazu, dass sich die Unter- und Oberteile von Gehäuse und Rotor ungleich schnell abkühlen, wodurch es zu einem Verzug der Komponenten kommt, was als "Buckeln" bezeichnet wird.

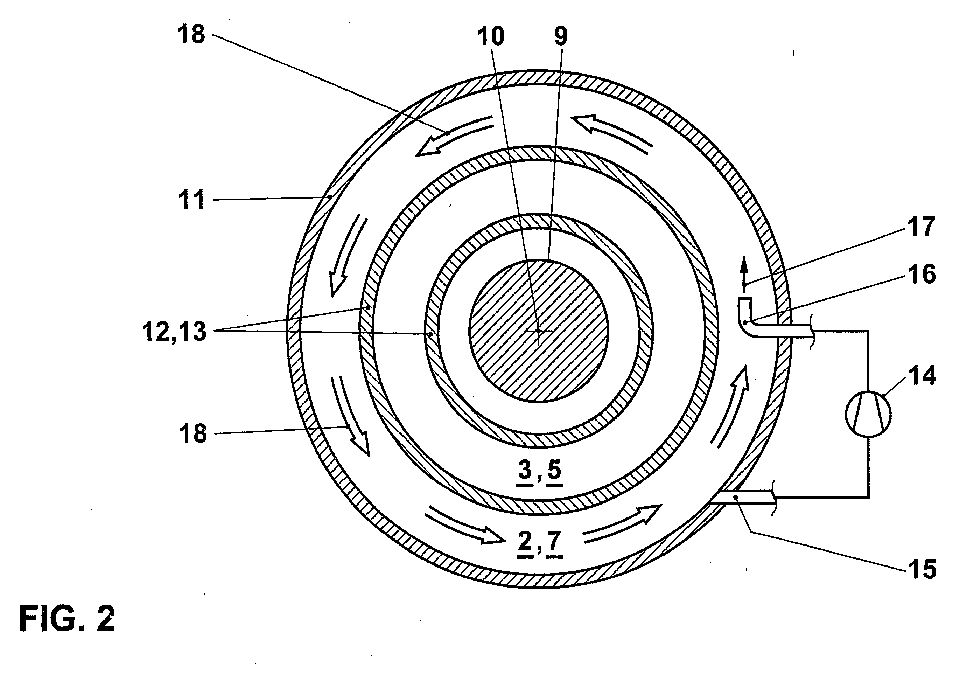

Bei der als Beispiel dargestellten Gasturbine ist die Erfindung jeweils im Bereich der die Brennkammern 3, 5 umgebenden Kavitäten 2, 7 realisiert. Die Querschnittsdarstellung in Figur 2 ist stark schematisiert, und könnte sowohl einen Schnitt im Bereich der ersten Brennkammer 3 als auch im Bereich der zweiten Brennkammer 5 darstellen. Zwischen einem Aussengehäuse 11 der Gasturbine und einer Brennraumwand 12, 13, welche auch als inneres Gehäuse verstanden werden kann, ist jeweils eine ringförmige Kavität 2, 7 ausgebildet. Nach dem Abstellen der Maschine wird Wärme, die in den Strukturen 9, 12, 13 gespeichert ist, zu einem erheblichen Teil über das äussere Gehäuse 11 abgeführt. Fluid in den Kavitäten 2, 7, neigt dabei aufgrund von Dichteunterschieden dazu, die angesprochene stabile Temperaturschichtung aufzubauen, welche zu vermeiden ja Aufgabe der Erfindung ist. Im dargestellten Beispiel für die Ausführung der Erfindung ist das Aussengehäuse mit einer Entnahmestelle 15 versehen, die mit der Saugseite eines Gebläses 14 verbunden ist. Die Druckseite des Gebläses 14 ist mit einem Ejektor 16 verbunden, der angeordnet ist, um ein Treibmedium in tangentialer Richtung in die ringförmige Kavität einzubringen. Die Treibmediumsströmung 17 wird dabei ausreichend dimensionierttypischerweise im Bereich von 1 kg/s pro Ejektor - um eine durch Pfeile 18 angedeutete Umfangsströmung anzuregen und aufrechtzuerhalten, welche die Entstehung der Temperaturschichtung vermeidet. Das Gebläse 14 kann bei der Ausführung der Erfindung mit Vorteil von der eigentlichen Stelle der Aufbringung der Antriebskraft, hier insbesondere vom thermischen Block der Gasturbine, beabstandet angeordnet werden, so, dass insbesondere der Antriebsmotor vor exzessiver Temperaturbelastung geschützt wird. Es ist weiterhin möglich, nicht dargestellte Absperrorgane in den Verbindungsleitungen vom Gebläse 14 zur Entnahmestelle 15 und zum Ejektor 16 anzuordnen; diese ermöglichen es, das Gebläse während des Betriebes der Turbomaschine vom Heissgas und gegebenenfalls aggressiven Verbrennungsprodukten in der Kavität 2, 7 zu isolieren, und erst nach Ausserbetriebnahme der Turbomaschine den Strömungsweg zum Antrieb der Ejektor-Treibströmung 17 zu öffnen.

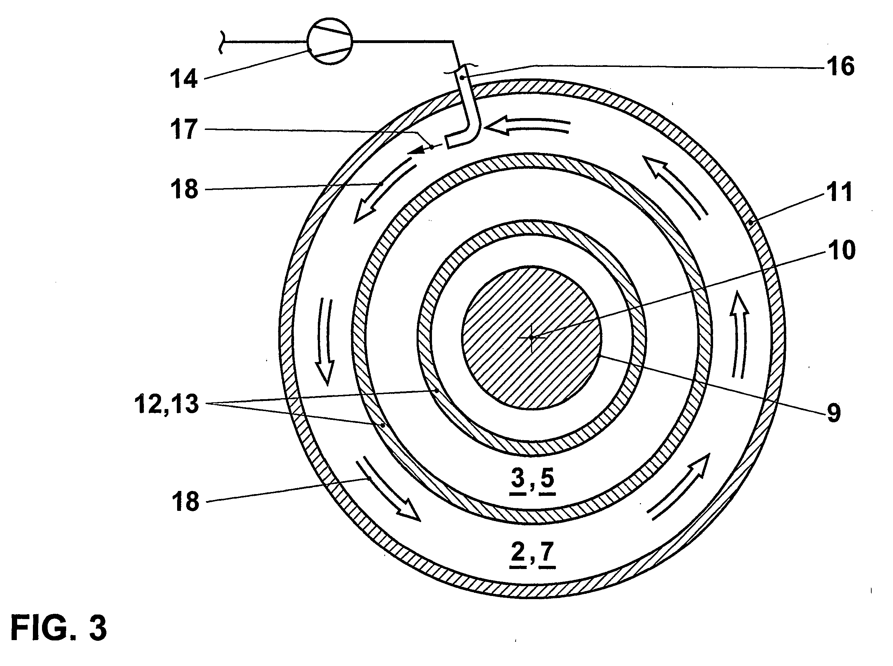

Es ist selbstverständlich auch möglich, dass das Treibmedium 17 des Ejektors 16 durch ein Gebläse 14 von aussen gefördert wird, wie in Figur 3 angedeutet. Unter der Prämisse, dass das Treibmedium 17 Umgebungsluft ist, welche eine geringere Temperatur und damit eine höhere Dichte aufweist als das in der Kavität 2, 7 enthaltene Fluid, wird der Ejektor 16 mit Vorteil an einer geodätisch höchstgelegenen Stelle der ringförmigen Kavität 2, 7 angeordnet. Der Dichteunterschied von Treibmedium und anzutreibendem Fluid verstärkt dann die Strömungsanregung des aus dem Ejektor 16 ausströmenden Treibmediums 17 zusätzlich. Bevorzugt ist zwischen Gebläse 14 und Ejektor 16 ein Rückschlag- oder Absperrelement angeordnet, dergestalt, dass im Betrieb der Turbomaschine ein Ausströmen von Heissgas verhindert wird. Ein Vorteil dieser offenen Ausführungsart ist darin zu sehen, dass eine thermische Belastung des Gebläses 14 vollständig vermeidbar ist, wenn dieses beispielsweise Frischluft fördert. Ein weiterer Vorteil ist, dass leicht gegebenenfalls vorhandene Hilfssysteme, etwa ein ohnehin vorhandenes Druckluftsystem, zur Förderung des Treibmediums angepasst werden können, dergestalt, dass unter Umständen vollständig auf das Gebläse 14 verzichtet werden kann. Zur Vermeidung von Thermoschocks kann das zum Ejektor geförderte Treibmittel vorgängig der Zuleitung zum Ejektor 16 über Wärmetauscherflächen geleitet werden, beispielsweise durch oder über heisse Strukturen der Maschine selbst, oder ein Gebläse 14 kann saugseitig mit anderen Gehäusekavitäten verbunden werden.

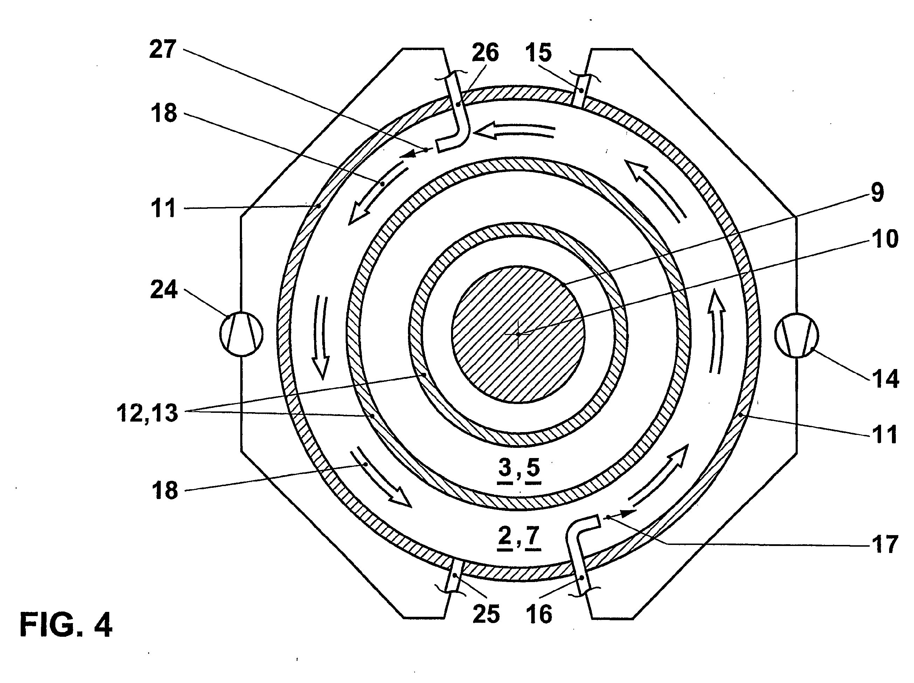

Eine weitere vorteilhafte Ausführungsform ist in Fig. 4 gezeigt. An einer axialen Position sind zwei Ejektoren 16, 26 mit gleichsinnig orientierter Ausblaserichtung - im Beispiel im Gegenuhrzeigersinn - am Umfang angeordnet, wobei ein erster Ejektor 16 an einer geodätisch am niedrigsten und ein zweiter Ejektor 26 an einer geodätisch höchstgelegenen gelegenen Stelle einer Kavität 2, 7 angeordnet ist. Ein Gebläse 14 ist druckseitig mit dem ersten Ejektor 16 verbunden, und fördert dessen Treibmedium 17 von einer bezogen auf die Ausblaserichtung der Ejektoren stromauf des zweiten Ejektors 26 gelegenen Entnahmestelle 15 zum Ejektor 16. Ein zweites Gebläse 24 ist druckseitig mit dem zweiten Ejektor 26 verbunden, und fördert dessen Treibmedium 27 von einer bezogen auf die Ausblaserichtung der Ejektoren stromauf des ersten Ejektors 16 gelegenen Entnahmestelle 25 zum Ejektor 26. Die im Gegenuhrzeigersinn ausströmenden Treibmedienströme 17, 27 regen eine im gleichen Drehsinn orientierte Durchströmung 18 der Kavität an. Die Ejektoren respektive deren Treibmittelströmung sind bevorzugt so auszulegen, dass die Geschwindigkeit der Umfangsströmung 18 im Bereich von etwa 8 m/s bis 20 m/s liegt. Weiterhin resultiert aus der Anordnung von Ejektoren und diesen zugeordneten Entnahmestellen an geodätisch entgegengesetzten Positionen eine Art Selbstregelung der Durchströmungsintensität: Wenn sich eine geringe vertikale Temperaturschichtung einstellt, so wird warmes Treibmedium 17 von der Entnahmestelle 15 zu einer geodätisch unten liegenden Stelle gefördert. In der rechten Gehäusehälfte stellt sich daher zusätzlich eine Auftriebskraft des Treibmediums 17 ein. Gleichzeitig wird kaltes Fluid von der Entnahmestelle 25 zum oben angeordneten Ejektor 26 gefördert. In der Folge stellt sich also eine Fallströmung des Treibmediums 27 in der linken Gehäusehälfte ein. Diese Naturkonvektion des Treibmediums unterstützt demnach die Anregung der Strömung 18, und zwar umso stärker, je grösser ein Temperaturunterschied zwischen der Gehäuseoberhälfte und dem Gehäuseunterteil ist.

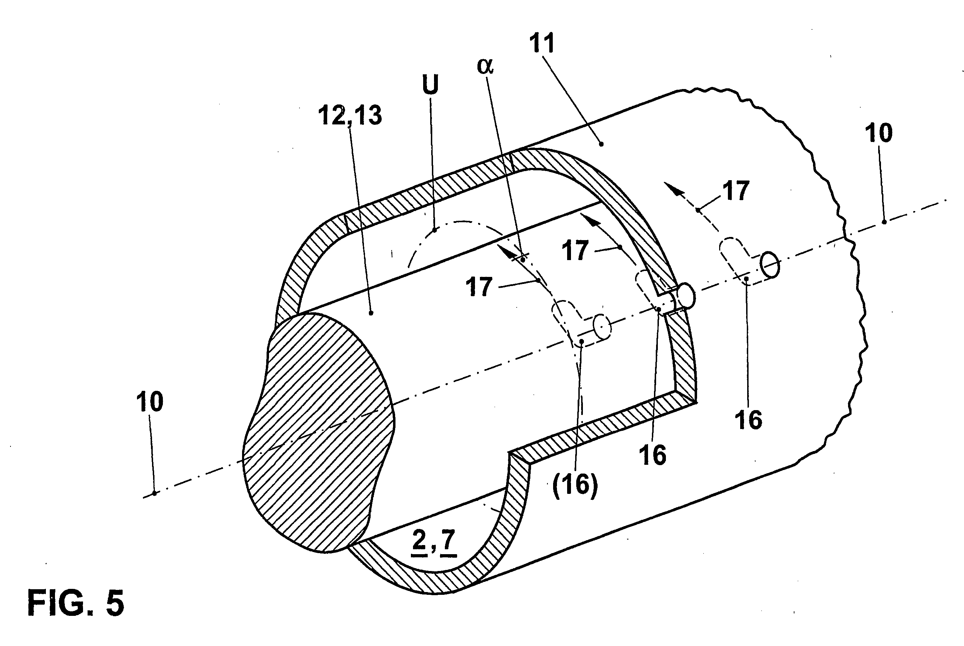

In Figur 5 ist eine perspektivische Darstellung einer ringförmigen Kavität dargestellt. Die innere Begrenzung 12, 13 ist nur schematisch als Vollzylinder dargestellt. Zwischen dieser inneren Begrenzung und einem Aussenmantel 11 ist eine Kavität 2, 7 ausgebildet. In axialer Richtung verteilt sind drei durch den Aussenmantel 11 hindurchgeführte, in der Darstellung an sich nicht sichtbare Ejektoren 16 hindurchgeführt, welche schematisch durch gestrichelte Linien angedeutet sind. Die Ejektoren sind so angeordnet, dass die Orientierung der Ausblaserichtung des Treibmediums in axialer Richtung um einen Winkel α gegen die durch eine strichpunktierte Linie U angedeutete Umfangsrichtung geneigt ist. Um insbesondere die primär angestrebte Umfangsströmung anzuregen, kann dieser Anstellwinkel α auf Werte unter 30°, insbesondere auf Werte kleiner als 10°, eingeschränkt werden. Es stellt sich in Folge eine nicht dargestellte schraubenförmige Durchströmung der Kavität ein, welche weiterhin ein sich gegebenenfalls einstellendes axiales Temperaturgefälle zu vermeiden hilft. In der Möglichkeit, eine gerichtete Strömung anzuregen, ist ein weiterer wesentlicher Vorteil der Erfindung zu sehen, der aus dem Stand der Technik nicht bekannt ist.

Die Erfindung ist keineswegs darauf beschränkt, in den am weitesten aussen liegenden Kavitäten 2, 7 verwendet zu werden. Bei geeigneter Ausführung der Mittel, welche die Konvektionsströmung anregen und aufrechterhalten, können diese Mittel ebenso in den Brennkammern 3, 5 oder und dem zwischen den Gehäuseelementen 12, 13 und der Welle 9 gebildeten Raum angeordnet werden.

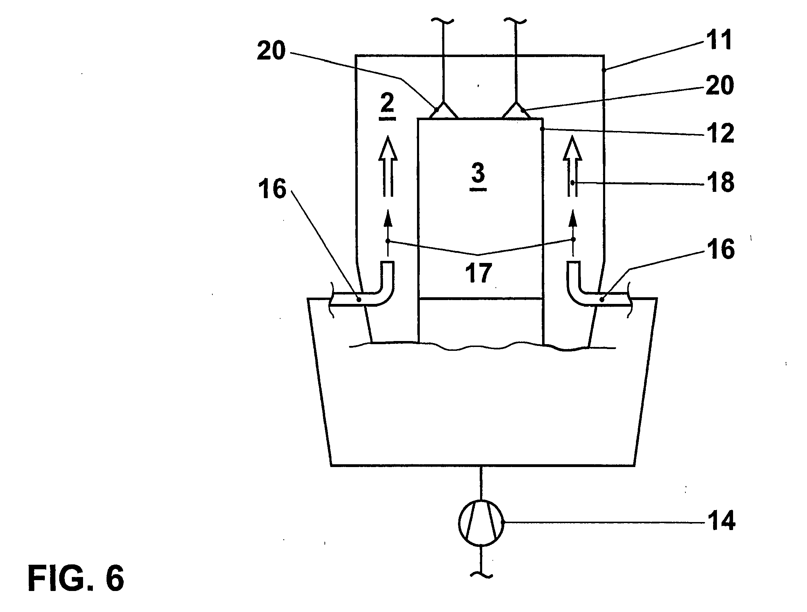

Figur 6 zeigt eine der Erfindung analoge Umwälzvorrichtung am Beispiel einer sogenannten Silobrennkammer einer Gasturbine. Der Brennraum 3 ist durch eine Brennraumwand 12 begrenzt, welche von einer Kavität 2 umgeben ist, durch welche im Betrieb die verdichtete Luft zu den Vormischbrennern 20 und von dort in die Brennkammer 3 strömt. Durch das äussere Gehäuse sind Ejektoren 16 geführt, welche mit dem Gebläse 14 verbunden sind; Im Stillstand der Gasturbine fördert das Gebläse 14 einen Strom eines Treibmediums 17 durch die Ejektoren 16 , welche eine Konvektion 18 in der Kavität 2 erzwingen, wodurch die Temperaturverteilung vergleichmässigt wird. In vergleichbarer Weise können analoge Abwandlungen der Erfindung in unterschiedlichsten Geometrien Anwendung finden.

Ein zusätzlicher Vorteil der Erfindung ist darin zu sehen, dass sie nicht auf eine Bewegung des Rotors angewiesen ist. Selbst dann, wenn der Rotor aus irgendwelchen Gründen doch blockiert sein sollte, oder wenn eine Wellendreh- oder Wellenschaltvorrichtung ausfällt, kann mittels der Erfindung das Buckeln des Gehäuses unterbunden oder zumindest deutlich verringert werden.

Es können auch Druckwellen auf an sich bekannte Weise zum Antrieb der Strömung in den Kavitäten selbst, oder anstelle eines Gebläses zum Antrieb der Treibmittelströmung eines Ejektors verwendet werden.

Der Fachmann erkennt ohne Weiteres, dass die Anwendung der Erfindung keineswegs auf Gasturbinen beschränkt ist, sondern dass die Erfindung in einer Vielzahl weiterer Anwendungsfälle eingesetzt werden kann. Selbstverständlich ist die Anwendung der Erfindung auch nicht auf eine in Fig. 1 dargestellte Gasturbine mit sequentieller Verbrennung beschränkt, sondern sie kann auch bei Gasturbinen mit nur einer oder mehr als zwei Brennkammern Anwendung finden. Insbesondere kann die Erfindung auch in Dampfturbinen realisiert werden.

### Bezugszeichenliste

- 1: Verdichter
- 2: Kavität, Plenum
- 3: Brennkammer
- 4: erste Turbine
- 5: Brennkammer
- 6: zweite Turbine
- 7: Kavität
- 9: Welle
- 10: Maschinenachse
- 11: Aussengehäuse, Aussenmantel, äussere Wand
- 12: inneres Gehäuse, innere Wand, Brennraumwand
- 13: inneres Gehäuse, innere Wand, Brennraumwand
- 14: Gebläse
- 15: Entnahmestelle
- 16: Ejektor
- 17: Treibmediumsströmung
- 18: erzwungene Strömung
- 20: Vormischbrenner
- 24: Gebläse
- 25: Entnahmestelle
- 26: Ejektor
- 27: Treibmediumsströmung
- U: Umfangsrichtung
- α: Anstellwinkel der Treibmediumsströmung gegen die Umfangsrichtung

## Patentansprüche

1. Turbomaschine, welche wenigstens eine Kavität (2, 7) mit ringförmigem oder ringsegmentförmigem Querschnitt aufweist, wobei innerhalb der Kavität wenigstens ein Mittel (16, 26) zur Anregung und Aufrechterhaltung einer wenigstens mit einer Geschwindigkeitskomponente tangential orientierten erzwungenen Strömung (18) angeordnet ist, **dadurch gekennzeichnet, dass** das Mittel zur Anregung und Aufrechterhaltung der Strömung wenigstens ein mit einem Treibmedium (17, 27) betreibbarer Ejektor (16, 26) ist, dessen Ausblaserichtung (17, 27) so orientiert ist, dass wenigstens ein Teil des Ausströmimpulses in Umfangsrichtung (U) orientiert ist.

2. Turbomaschine nach Anspruch 1, **dadurch gekennzeichnet, dass** das Mittel so beschaffen und angeordnet ist, dass die erzwungene Strömung um einen Winkel (α) von weniger als 30°, bevorzugt weniger als 10°, gegen die Umfangsrichtung (U) in axialer Richtung geneigt ist.

3. Turbomaschine nach Anspruch 1, **dadurch gekennzeichnet, dass** wenigstens zwei Ejektoren (16, 26) mit gleichsinniger Orientierung der Ausblaserichtung in Umfangsrichtung der Kavität äquidistant angeordnet sind.

4. Turbomaschine nach einem der Ansprüche 1 oder 3, **dadurch gekennzeichnet, dass** die Kavität eine Entnahmestelle (15, 25) aufweist, welche Entnahmestelle mit der Saugseite eines Gebläses (14, 24) verbunden ist, und wobei die Druckseite des Gebläses mit dem Ejektor (16, 26) verbunden ist.

5. Turbomaschine nach Anspruch 4, **dadurch gekennzeichnet, dass** ein Ejektor (16, 26) an einer geodätisch am höchsten oder am niedrigsten liegenden Stelle der Kavität (2, 7) angeordnet ist, und die mit diesem über das Gebläse (14, 24) verbundene Entnahmestelle (15, 25) an einer entgegengesetzt liegenden Stelle der Kavität angeordnet ist.

6. Turbomaschine nach einem der Ansprüche 4 oder 5, **dadurch gekennzeichnet, dass** jeweils eine Entnahmestelle (15, 25) bezogen auf die Ausblaserichtung (17, 27) eines Ejektors (16, 26) unmittelbar stromauf dieses Ejektors angeordnet ist, und diese Entnahmestelle mit einem an einer anderen Umfangsposition einer ringförmigen Kavität angeordneten Ejektor verbunden ist.

7. Turbomaschine nach einem der vorstehenden Ansprüche, **dadurch gekennzeichnet, dass** die Kavität zwischen einem inneren (12, 13) und einem äusseren (11) Gehäuse der Turbomaschine ausgebildet ist.

8. Turbomaschine nach einem der vorstehenden Ansprüche, **dadurch gekennzeichnet, dass** das innere Gehäuse eine Brennkammerhaube oder eine Brennraumwand einer Gasturbine ist, und, dass das äussere Gehäuse ein Aussenmantel der Gasturbine ist.

9. Turbomaschine nach einem der vorstehenden Ansprüche, **dadurch gekennzeichnet, dass** in der Kavität umfangssymmetrisch Öffnungen zur Ableitung von Fluid aus der Kavität angeordnet sind.

10. Turbomaschine nach Anspruch 9, **dadurch gekennzeichnet, dass** die Öffnungen ein Ringspalt, mehrere ringsegmentförmige Spalte, oder umfangssymmetrisch angeordnete Bohrungen sind.

11. Turbomaschine nach einem der Ansprüche 9 oder 10, **dadurch gekennzeichnet, dass** die Öffnungen mit dem Heissgaspfad (6) einer Gasturbine in Fluidverbindung stehen.

12. Verfahren zum Betrieb einer Turbomaschine nach einem der vorstehenden Ansprüche, bei welchem im Stillstand der Turbomaschine, insbesondere in einer Ausserbetriebnahme folgenden Abkühlungsphase, eine wenigstens mit einer Geschwindigkeitskomponente tangential orientierte Durchströmung (18) der Kavität (2, 7) erzwungen wird, **dadurch gekennzeichnet, dass** die Strömung durch aus Ejektoren (16, 26) austretendes Fluid (17, 27) erzwungen wird, deren Ausblaserichtung (17, 27) so orientiert ist, dass wenigstens ein Teil des Ausströmimpulses in Umfangsrichtung (U) orientiert ist.

13. Verfahren nach Anspruch 12, **dadurch gekennzeichnet, dass** Fluid durch bevorzugt umfangssymmetrisch angeordnete Öffnungen in den Heissgaspfad einer Gasturbine abgeführt wird.

14. Verfahren nach Anspruch 12, **dadurch gekennzeichnet, dass** das Treibmittel (17, 27) für die Ejektoren (16, 26) aus der Kavität (2, 7) entnommen wird, dergestalt, dass ein im wesentlichen geschlossenes Volumen umgewälzt wird.

15. Verfahren nach einem der Ansprüche 12 bis 14, **dadurch gekennzeichnet, dass** innerhalb einer Kavität mit im wesentlichen ringförmigem Querschnitt eine Umfangsströmung oder eine schraubenförmige Strömung mit einem Steigungswinkel (α) unter 30°, insbesondere unter 10°, erzwungen wird.

## Claims

1. Turbomachine having at least one cavity (2, 7) with an annular or ring-segment-shaped cross section, wherein at least one means (16, 26) for exciting and maintaining a forced flow (18) oriented tangentially at least with one velocity component is arranged inside the cavity, **characterized in that** the means for exciting and maintaining the flow is at least one ejector (16, 26) which can be operated with a motive fluid (17, 27) and whose blowout direction (17, 27) is oriented in such a way that at least part of the outflow impulse is oriented in the circumferential direction (U).

2. Turbomachine according to Claim 1, **characterized in that** the means are configured and arranged in such a way that the forced flow is inclined in the axial direction relative to the circumferential direction (U) by an angle (α) of less than 30°, preferably less than 10°.

3. Turbomachine according to Claim 1, **characterized in that** at least two ejectors (16, 26) oriented in the same blowout direction are arranged equidistantly in the circumferential direction of the cavity.

4. Turbomachine according to either of Claims 1 and 3, **characterized in that** the cavity has an extraction point (15, 25), which extraction point is connected to the suction side of a blower (14, 24), the pressure side of the blower being connected to the ejector (16, 26).

5. Turbomachine according to Claim 4, **characterized in that** an ejector (16, 26) is arranged at a point of the cavity (2, 7) which is situated at the highest or lowest geodetic level, and the extraction point (15, 25) connected to this ejector (16, 26) via the blower (14, 24) is arranged at an opposite point of the cavity.

6. Turbomachine according to either of Claims 4 and 5, **characterized in that** in each case an extraction point (15, 25), relative to the blowout direction (17, 27) of an ejector (16, 26), is arranged directly upstream of this ejector, and this extraction point is connected to an ejector arranged at another circumferential position of an annular cavity.

7. Turbomachine according to one of the preceding claims, **characterized in that** the cavity is formed between an inner casing (12, 13) and an outer casing (11) of the turbomachine.

8. Turbomachine according to one of the preceding claims, **characterized in that** the inner casing is a combustor dome or a combustor wall of a gas turbine, and **in that** the outer casing is an outer shell of the gas turbine.

9. Turbomachine according to one of the preceding claims, **characterized in that** circumferentially symmetrical openings for drawing off fluid from the cavity are arranged in the cavity.

10. Turbomachine according to Claim 9, **characterized in that** the openings are an annular gap, a plurality of ring-segment-shaped gaps, or holes arranged in a circumferentially symmetrical manner.

11. Turbomachine according to either of Claims 9 and 10, **characterized in that** the openings are fluidically connected to the hot-gas path (6) of a gas turbine.

12. Method of operating a turbomachine according to one of the preceding claims, in which, when the turbomachine is at rest, in particular during a cooling phase following a shutdown, a flow (18) through the cavity (2, 7) is forced, this flow (18) being tangentially oriented at least with one velocity component, **characterized in that** the flow is forced by fluid (17, 27) which issues from ejectors (16, 26), whose blowout direction (17, 27) is oriented in such a way that at least part of the outflow impulse is oriented in the circumferential direction (U).

13. Method according to Claim 12, **characterized in that** the fluid is discharged into the hot-gas path of a gas turbine through openings preferably arranged in a circumferentially symmetrical manner.

14. Method according to Claim 12, **characterized in that** the motive fluid (17, 27) for the ejectors (16, 26) is extracted from the cavity (2, 7) in such a way that an essentially closed volume is circulated.

15. Method according to one of Claims 12 to 14, **characterized in that** a circumferential flow or a helical flow with a helix angle (α) less than 30°, in particular less than 10°, is forced inside the cavity having an essentially annular cross section.

## Revendications

1. Turbomachine présentant au moins une cavité (2, 7) de section transversale annulaire ou en forme de segment annulaire, dans laquelle un moyen (16, 26) d'excitation et de maintien d'un écoulement (18) forcé, orienté au moins tangentiellement avec une composante de vitesse à l'intérieur de la cavité, est disposé à l'intérieur de la cavité, **caractérisée en ce que** le moyen d'excitation et de maintien de l'écoulement est au moins un éjecteur (16, 26) pouvant fonctionner avec un fluide de propulsion (17, 27), dont la direction de soufflage (17, 27) est orientée de telle sorte qu'au moins une partie de l'impulsion d'éjection du courant soit orientée dans la direction périphérique (U).

2. Turbomachine selon la revendication 1, **caractérisée en ce que** le moyen est constitué et disposé de telle sorte que l'écoulement forcé soit incliné dans la direction axiale d'un angle (α) inférieur à 30°, de préférence inférieur à 10°, s'écartant de la direction périphérique (U).

3. Turbomachine selon la revendication 1, **caractérisée en ce qu'**au moins deux éjecteurs (16, 26) orientés dans le même sens que la direction de soufflage sont disposés de manière équidistante dans la direction périphérique de la cavité.

4. Turbomachine selon l'une quelconque des revendications 1 ou 3, **caractérisée en ce que** la cavité présente un point de prélèvement (15, 25), lequel point de prélèvement est connecté au côté d'aspiration d'une soufflante (14, 24) et le côté de pression de la soufflante étant connecté à l'éjecteur (16, 26).

5. Turbomachine selon la revendication 4, **caractérisée en ce qu'**un éjecteur (16, 26) est disposé en un emplacement géodésiquement le plus haut ou le plus bas de la cavité (2, 7), et le point de prélèvement (15, 25) connecté à cet emplacement par le biais de la soufflante (14, 24) est disposé en un emplacement opposé de la cavité.

6. Turbomachine selon l'une quelconque des revendications 4 ou 5, **caractérisée en ce qu'**un point de prélèvement respectif (15, 25) est disposé par rapport à la direction de soufflage (17, 27) d'un éjecteur (16, 26) directement en amont de cet éjecteur, et ce point de prélèvement est connecté à un éjecteur disposé dans une autre position périphérique d'une cavité annulaire.

7. Turbomachine selon l'une quelconque des revendications précédentes, **caractérisée en ce que** la cavité est réalisée entre un boîtier intérieur (12, 13) et un boîtier extérieur (11) de la turbomachine.

8. Turbomachine selon l'une quelconque des revendications précédentes, **caractérisée en ce que** le boîtier intérieur est une calotte de chambre de combustion ou une paroi de chambre de combustion d'une turbine à gaz et **en ce que** le boîtier extérieur est une enveloppe extérieure de la turbine à gaz.

9. Turbomachine selon l'une quelconque des revendications précédentes, **caractérisée en ce que** des ouvertures sont disposées de manière symétrique par rapport à la périphérie dans la cavité pour l'évacuation du fluide hors de la cavité.

10. Turbomachine selon la revendication 9, **caractérisée en ce que** les ouvertures sont une fente annulaire, plusieurs fentes en forme de segments annulaires, ou des alésages disposés symétriquement par rapport à la périphérie.

11. Turbomachine selon la revendication 9 ou 10, **caractérisée en ce que** les ouvertures sont en liaison fluidique avec la trajectoire des gaz chauds (6) d'une turbine à gaz.

12. Procédé pour faire fonctionner une turbomachine selon l'une quelconque des revendications précédentes, dans lequel, à l'arrêt de la turbomachine, notamment lors d'une phase de refroidissement suivant une mise hors service, un écoulement (18) traversant la cavité (2, 7), orienté au moins tangentiellement avec une composante de vitesse, est produit de manière forcée, **caractérisé en ce que** l'écoulement est forcé par du fluide (17, 27) sortant d'éjecteurs (16, 26), dont la direction de soufflage (17, 27) est orientée de telle sorte qu'au moins une partie de l'impulsion d'éjection du courant soit orientée dans la direction périphérique (U).

13. Procédé selon la revendication 12, **caractérisé en ce que** du fluide est évacué par des ouvertures disposées de préférence de manière symétrique par rapport à la périphérie dans la trajectoire des gaz chauds d'une turbine à gaz.

14. Procédé selon la revendication 12, **caractérisé en ce que** le fluide de propulsion (17, 27) pour les éjecteurs (16, 26) est prélevé de la cavité (2, 7) de telle sorte qu'un volume essentiellement fermé soit mis en circulation.

15. Procédé selon l'une quelconque des revendications 12 à 14, **caractérisé en ce qu'**un écoulement périphérique ou un écoulement hélicoïdal ayant un angle d'attaque (α) inférieur à 30°, notamment inférieur à 10°, est forcé à l'intérieur d'une cavité ayant une section transversale essentiellement annulaire.
